Europäisches Patentamt

European Patent Office

Office européen des brevets

(11) Numéro de publication: **0 504 864 A1**

## (12) DEMANDE DE BREVET EUROPEEN

(21) Numéro de dépôt: **92104756.9**

(22) Date de dépôt: **19.03.92**

(51) Int. Cl.5: **H04M 1/02**, H04M 1/72

(30) Priorité: **21.03.91 FR 9103558**

(43) Date de publication de la demande:
**23.09.92 Bulletin 92/39**

(84) Etats contractants désignés:
**CH DE DK ES GB IT LI**

(71) Demandeur: **SWATCH AG**
**Jakob Stämpflistrasse 94**
**CH-2500 Biel(CH)**

(72) Inventeur: **Kappeler, Markus**
**St. Josefsgasse 6**
**CH-4500 Soleure(CH)**
Inventeur: **Voser, Beat**
**Schulstrasse 14**
**CH-2540 Granges(CH)**

(74) Mandataire: **de Montmollin, Henri et al**
**ICB Ingénieurs Conseils en Brevets SA**
**Passage Max Meuron 6**
**CH-2001 Neuchâtel(CH)**

(54) **Appareil téléphonique comportant un premier et un second combiné.**

(57) L'appareil téléphonique (1) comporte une base (2) destinée à être reliée à une ligne téléphonique, un premier combiné (4) relié à la base (2) par un câble (5) et un deuxième combiné (6) relié à la base (2) par une liaison hertzienne.

Pour diminuer l'encombrement de l'appareil 1, la base (2) comporte un logement (11) dans lequel le deuxième combiné (6) peut être au moins sensiblement complètement engagé. En outre, ce logement (11) débouche dans une des parois (2c) du boîtier de la base (2) par une ouverture (11b) qui met le microphone et l'écouteur du deuxième combiné (6) en liaison acoustique avec l'extérieur de la base (2), ce qui permet d'utiliser ce deuxième combiné (6) même lorsqu'il est disposé dans ce logement (11).

Fig. 2

La présente invention a pour objet un appareil téléphonique destiné à être connecté à une ligne téléphonique et comportant :

- un premier combiné comprenant un premier boîtier, un premier écouteur et un premier microphone disposés dans ledit premier boîtier en liaison acoustique avec l'extérieur dudit premier boîtier;

- un deuxième combiné comprenant un deuxième boîtier, un deuxième écouteur et un deuxième microphone disposés dans ledit deuxième boîtier en liaison acoustique avec l'extérieur dudit deuxième boîtier, ledit deuxième combiné comprenant en outre une première antenne et des premiers circuits destinés à relier ledit deuxième écouteur et ledit deuxième microphone à ladite première antenne;

- une base comprenant un troisième boîtier comportant un premier logement destiné à recevoir ledit premier boîtier et un deuxième logement destiné à recevoir ledit deuxième boîtier, ladite base comprenant en outre une deuxième antenne et des deuxièmes circuits destinés à relier ladite ligne téléphonique à ladite deuxième antenne; et

- des moyens pour relier galvaniquement ledit premier écouteur et ledit premier microphone à ladite ligne téléphonique; lesdites première et deuxième antennes et lesdits premiers et deuxièmes circuits étant adaptés les uns aux autres de manière à permettre une liaison dudit deuxième écouteur et dudit deuxième microphone avec ladite ligne téléphonique.

Comme ci-dessus, on utilisera dans toute la description qui va suivre, pour éviter des répétitions inutiles, le terme "premier combiné" pour désigner celui qui est relié galvaniquement à la base de l'appareil par des moyens comportant notamment un câble comprenant au moins deux fils et qui est comparable au combiné d'un appareil téléphonique classique, et le terme "deuxième combiné" pour désigner celui qui est relié à cette base par une liaison hertzienne, assurée notamment par des circuits émetteurs et récepteurs et par des antennes que comportent cette base et ce deuxième combiné.

Des appareils du genre défini ci-dessus permettent à leur utilisateur d'avoir des conversations téléphoniques avec un correspondant en utilisant soit le premier combiné, de manière classique, auquel cas cet utilisateur doit évidemment rester à proximité de la base de l'appareil téléphonique, soit le deuxième combiné, auquel cas cet utilisateur peut se déplacer librement jusqu'à une certaine distance de la base, distance qui dépend évidemment de la puissance des émetteurs et de la sensibilité des récepteurs assurant la liaison hertzienne entre la base et le deuxième combiné.

En outre, des appareils de ce genre permettent à deux personnes utilisant chacune un des combinés d'avoir une conversation téléphonique l'une avec l'autre, ou d'avoir, ensemble, une conversation téléphonique avec une troisième personne.

De tels appareils téléphoniques sont décrits notamment dans la demande de brevet DE-A-3 434 686.

Dans l'appareil décrit par cette demande de brevet, la face supérieure de la base est conformée de manière à présenter deux logements séparés par un clavier de sélection des numéros d'appel et destinés à recevoir chacun l'un des deux combinés. Cet appareil est donc assez encombrant.

Un but de la présente invention est de proposer un appareil du même genre mais qui prenne moins de place, tout en offrant à son ou ses utilisateurs les mêmes possibilités d'emploi que les appareils connus.

Ce but est atteint par l'appareil téléphonique revendiqué qui est caractérisé par le fait que ledit deuxième combiné peut être au moins sensiblement complètement engagé dans ledit deuxième logement, et que ledit deuxième logement comporte une ouverture ménagée dans une paroi dudit troisième boîtier de manière que, lorsque ledit deuxième combiné est disposé dans ledit deuxième logement, ledit deuxième écouteur et ledit deuxième microphone sont également en liaison acoustique avec l'extérieur dudit troisième boîtier.

D'autres buts et avantages de l'invention seront rendus évidents par la description qui va suivre et qui sera faite en se référant au dessin annexé dans lequel :

- la figure 1 est une vue de côté schématique d'une forme d'exécution d'un appareil téléphonique selon l'invention;

- la figure 2 représente schématiquement l'appareil téléphonique de la figure 1 dans une vue de dessous dans la direction de la flèche A de cette figure 1;

- la figure 3 représente schématiquement l'appareil téléphonique de la figure 1 dans une vue en bout, dans la direction de la flèche B de cette figure 1;

- la figure 4 représente schématiquement le boîtier de la base de l'appareil téléphonique de la figure 1 dans une vue en coupe selon l'axe I-I des figures 1 et 2;

- la figure 5 représente schématiquement le boîtier du deuxième combiné de l'appareil téléphonique de la figure 1 dans une vue en coupe selon l'axe I-I des figures 1 et 2;

- la figure 6 représente un schéma de principe des circuits électriques et électroniques de l'appareil téléphonique de la figure 1; et

- la figure 7 représente une variante d'une partie du schéma de la figure 6.

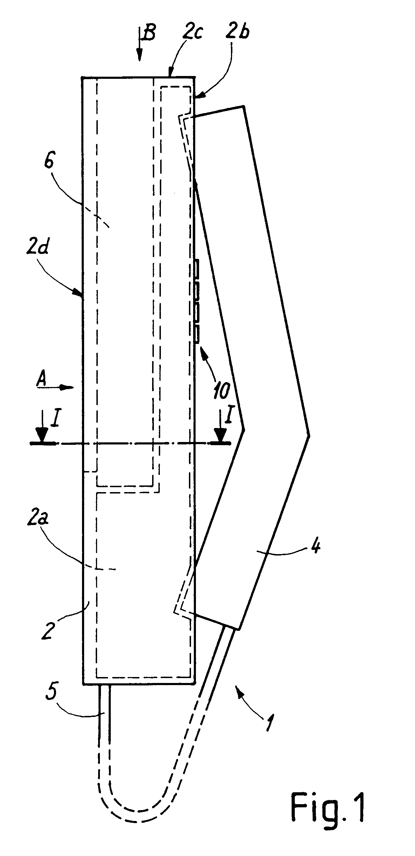

Dans sa forme d'exécution représentée schématiquement et à titre d'exemple non limitatif par les figures 1 à 5, l'appareil téléphonique selon l'invention, désigné dans son ensemble par la référence 1, comporte une base 2 reliée au réseau téléphonique par un câble 3, un premier combiné 4 relié à la base 2 par un câble 5, et un deuxième combiné 6 relié à la base 2 par une liaison hertzienne.

Le premier combiné 4 comporte, de manière classique, un microphone et un écouteur qui ne sont pas visibles dans les figures 1 à 5. Ce microphone et cet écouteur sont reliés galvaniquement à la base 2 par des fils situés dans le câble 5 et sont en liaison acoustique avec l'extérieur du boîtier du combiné 4 par des ouvertures ménagées dans ce boîtier, qui ne sont pas non plus visibles dans les figures 1 à 5.

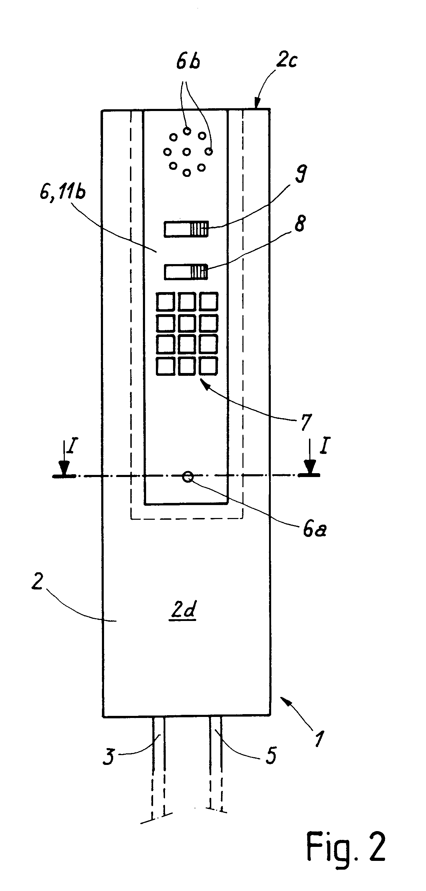

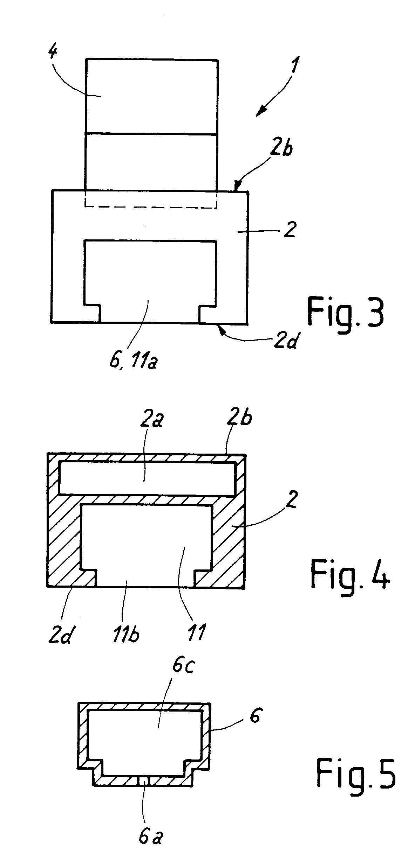

Le deuxième combiné 6 comporte également un microphone et un écouteur, qui ne sont pas non plus visibles dans les figures 1 à 5. Ce microphone et cet écouteur sont en liaison acoustique avec l'extérieur du boîtier de ce combiné 6 par des ouvertures ménagées dans ce boîtier, qui sont visibles à la figure 2 où elles sont respectivement désignées par les références 6a et 6b. En outre, ce microphone et cet écouteur sont respectivement reliés à un circuit émetteur et à un circuit récepteur situés à l'intérieur du boîtier de ce combiné 6, dans un espace prévu à cet effet et désigné par la référence 6c à la figure 5.

Ce circuit émetteur et ce circuit récepteur sont évidemment reliés à une antenne adéquate, et ils sont destinés à permettre l'établissement d'une liaison hertzienne avec des circuits correspondants disposés dans la base 2. L'antenne mentionnée ci-dessus n'a pas été représentée car, selon les cas, elle peut être fixe et disposée en permanence entièrement à l'intérieur du boîtier du combiné 6, ou être télescopique et escamotable complètement ou partiellement dans ce boîtier. Une telle antenne est en outre bien connue des spécialistes.

Le combiné 6 comporte encore une source d'alimentation en énergie électrique, qui peut être une simple pile ou un accumulateur rechargeable, et qui n'est pas visible dans les figures 1 à 5.

Dans le cas où cette source est un accumulateur rechargeable, chacune des bornes de ce dernier est reliée à une borne disposée sur la paroi extérieure de ce combiné 6, de manière à permettre la recharge de cet accumulateur d'une manière dont un exemple sera décrit plus loin.

Le combiné 6 comporte en outre des moyens de sélection d'un numéro d'appel, qui sont constitués, dans cet exemple, par un clavier 7 qui est un élément bien connu et qui ne sera donc pas décrit en détail ici. Ce clavier 7 est également relié, par l'intermédiaire d'un circuit de contrôle, au circuit émetteur du combiné 6, de manière que l'utilisateur de ce combiné 6 puisse établir une communication avec un correspondant, même s'il ne se trouve pas à proximité immédiate de la base 2.

Deux curseurs 8 et 9 sont disposés chacun dans une fente ménagée dans la face du combiné 6 où est situé le clavier de sélection 7 et peuvent être déplacés manuellement, dans cette fente, d'une première position, par exemple celle qui est représentée à la figure 2, à une deuxième position. En outre, chacun des curseurs 8 et 9 est associé à un interrupteur, non visible dans les figures 1 à 5, qui est ouvert ou fermé selon que ce curseur occupe sa première ou sa deuxième position.

Comme cela sera décrit en détail plus loin, ces interrupteurs sont reliés aux divers circuits du combiné 6 de manière que, lorsque le combiné 6 n'est pas dans son logement 11, il est hors service ou en service selon que le curseur 8 occupe la position représentée à la figure 2 ou son autre position, et son circuit émetteur est déclenché ou enclenché selon que le curseur 9 occupe la position représentée à cette figure 2 ou son autre position.

La base 2 comporte aussi des moyens de sélection d'un numéro d'appel, qui sont également constitués, dans cet exemple, par un clavier qui est visible dans la figure 1 où il est désigné par la référence 10.

La base 2 comporte en outre un circuit émetteur et un circuit récepteur qui sont adaptés à ceux qui se trouvent dans le combiné 6, ainsi que d'autres éléments électriques et/ou électroniques qui permettent à l'usager de l'appareil 1 de recevoir ou d'établir une communication avec un correspondant et de converser avec ce dernier en utilisant le premier combiné 4 ou le deuxième combiné 6. Ces éléments, dont des exemples seront décrits plus loin, sont disposés pour la plupart à l'intérieur du boîtier de la base 2, dans un espace prévu à cet effet et désigné par la référence 2a dans les figures 1 et 4.

Comme l'appareil connu décrit dans la demande de brevet DE-A-3 434 686 déjà mentionnée, l'appareil 1 comporte des moyens permettant de poser les combinés 4 et 6 à un endroit déterminé lorsqu'ils ne sont pas utilisés.

Mais contrairement à cet appareil connu, seul le combiné 4 peut être posé sur la face supérieure 2b de la base 2, qui comporte à cet effet un logement constitué, dans cet exemple, par deux dépressions ménagées dans la face supérieure 2b du boîtier de la base 2 et adaptées pour recevoir chacune une des extrémités de ce combiné 4. Il est évident que la constitution de ce logement du combiné 4 dépend directement de la forme de ce dernier, qui peut être très différente de celle qui est représentée aux figures 1 et 3.

Le combiné 6, lui, peut être disposé dans un deuxième logement, désigné par la référence 11, ménagé dans la base 2 et qui a évidemment une forme et des dimensions adaptées à celles de ce combiné 6.

Dans le présent exemple, le logement 11 débouche dans la paroi terminale 2c de la base 2 par une ouverture 11a dont la forme et les dimensions correspondent à celles de la section transversale du combiné 6, de manière que ce dernier puisse être aisément glissé dans le logement 11 lorsqu'il n'est pas utilisé, ou sorti de ce logement 11 lorsqu'on désire l'utiliser.

En outre, ce logement 11 débouche également dans la paroi inférieure 2d de la base 2 par une ouverture 11b conformée de manière que les ouvertures 6a et 6b, qui mettent respectivement le microphone et l'écouteur du combiné 6 en liaison acoustique avec l'extérieur du boîtier de ce combiné 6, débouchent dans cette ouverture 11b lorsque le combiné 6 est disposé dans le logement 11. Ce microphone et cet écouteur sont donc alors également en liaison acoustique avec l'extérieur de la base 2.

De préférence, la base 2 comprend également des moyens qui coopèrent avec des moyens correspondants que comporte le combiné 6 pour empêcher ce dernier de sortir du logement 11 de manière intempestive. Ces moyens n'ont pas été représentés car ils peuvent être de natures très diverses et sont bien connus des spécialistes. Ils peuvent par exemple comporter des billes disposées partiellement dans des trous ménagés dans les parois latérales du logement 11 et soumises à l'action de ressorts tendant à les faire sortir de ces trous, et pénétrant partiellement dans des trous correspondants ménagés dans les parois latérales du combiné 6 lorsque ce dernier est dans le logement 11.

Lorsque la source d'alimentation en énergie électrique du combiné est un accumulateur rechargeable et que le boîtier de ce combiné 6 comporte deux bornes reliées chacune à l'une des bornes de cet accumulateur, la base 2 comporte également deux bornes disposées dans la partie de la paroi de son boîtier qui délimite le logement 11 de manière à venir en contact avec celles du combiné 6 lorsque ce dernier est dans ce logement 11 et à relier alors l'accumulateur du combiné 6 à un circuit, situé dans la base 2, destiné à assurer la recharge de cet accumulateur d'une manière qui sera décrite en détail plus loin. Ces bornes n'ont pas été représentées dans les figures 1 à 5, car leur nature et leur disposition exactes peuvent être choisies très librement.

On voit que le fait de prévoir, dans la base d'un appareil téléphonique comportant un premier et un deuxième combiné reliés respectivement à cette base par un câble et par une liaison hertzienne, un logement tel que le logement 11 pour recevoir le deuxième combiné lorsque celui-ci n'est pas utilisé, permet de diminuer considérablement l'encombrement de cet appareil par rapport à l'encombrement des appareils connus.

En outre, le fait de configurer ce logement du deuxième combiné de manière que le microphone et l'écouteur de celui-ci soient en liaison acoustique avec l'extérieur de la base de l'appareil lorsque ce deuxième combiné est disposé dans ce logement permet, même dans ce cas, d'utiliser ce combiné pour converser avec un correspondant sans le séparer de la base. Dans un tel cas, l'appareil selon l'invention peut donc être utilisé par deux personnes à la fois, l'une utilisant le premier combiné de la manière classique, et l'autre utilisant l'ensemble formé par la base et le deuxième combiné. Cette utilisation de l'appareil téléphonique selon l'invention est analogue à celle qui est possible avec l'appareil décrit dans le brevet US-A-4 817 138.

L'appareil téléphonique selon l'invention peut évidemment aussi être utilisé par deux personnes dont l'une se trouve à proximité de la base et utilise le premier combiné et l'autre, qui utilise le deuxième combiné, peut se trouver à une certaine distance de cette base.

Il est évident que la forme et les dimensions du deuxième combiné d'un appareil téléphonique selon l'invention peuvent être très différentes de celles du combiné 6 de l'appareil 1 représenté aux figures 1 à 5, et que dans chaque cas la forme et les dimensions du logement ménagé dans la base de l'appareil sont adaptées à celles de ce deuxième combiné.

De plus, dans la forme d'exécution représentée par les figures 1 à 5, la forme et les dimensions du logement 11 sont telles que le deuxième combiné 6 peut être complètement introduit dans ce logement 11.

Cette disposition est évidemment celle qui est la plus avantageuse du point de vue de l'encombrement de l'appareil téléphonique 1. Mais elle présente l'inconvénient qu'il peut être difficile de saisir le deuxième combiné 6 pour le sortir de ce logement 11.

Pour éviter cet inconvénient, on peut donner à ce logement 11 une forme et des dimensions telles que le deuxième combiné 6 dépasse légèrement de la base 2 lorsqu'il est placé dans ce logement 11. Cette disposition permet de saisir facilement le combiné 6 lorsqu'on veut le sortir du logement 11, sans augmenter sensiblement l'encombrement de l'appareil téléphonique 1.

Toujours dans la forme d'exécution représentée par les figures 1 à 5, l'ouverture 11a qui permet d'introduire le deuxième combiné 6 dans le logement 11 est ménagée dans la face terminale 2c du boîtier de la base 2, et l'ouverture 11b qui permet la liaison acoustique du microphone et de l'écouteur de ce combiné 6 avec l'extérieur de la base 2 est ménagée dans la face inférieure 2d de ce même boîtier de la base 2.

Dans d'autres formes d'exécution, qui n'ont pas été représentées, l'ouverture 11a et/ou l'ouverture 11b peuvent être ménagées dans d'autres faces du boîtier de la base 2. Ces deux ouvertures 11a et 11b peuvent même être confondues en une seule qui permet alors à la fois l'introduction du deuxième combiné 6 dans le logement 11 et la liaison acoustique du microphone et de l'écouteur de ce combiné 6 avec l'extérieur du boîtier de la base 2.

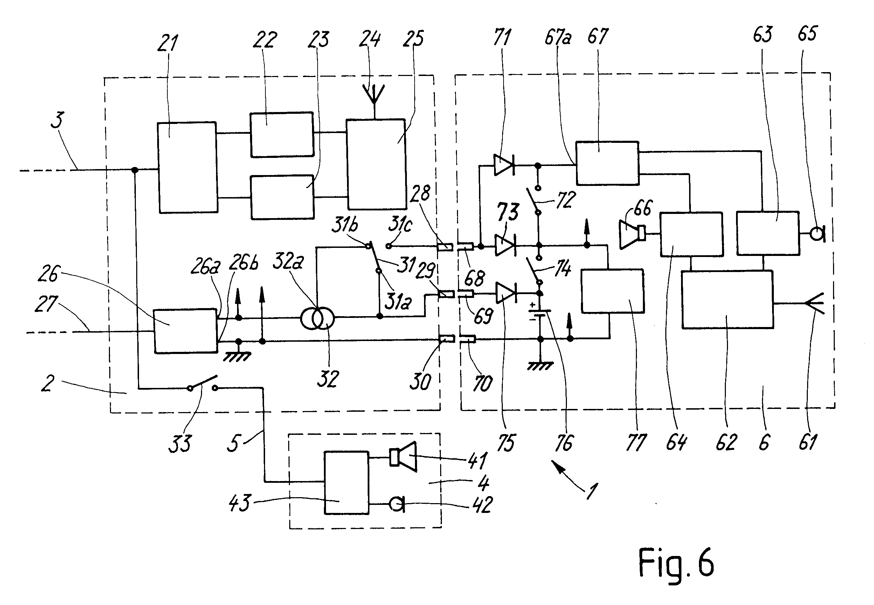

Dans le schéma de l'appareil téléphonique selon l'invention représenté à titre d'exemple non limitatif par la figure 6, cet appareil, sa base, le câble qui relie cette base au réseau téléphonique, son premier combiné, le câble qui relie ce premier combiné à la base, et le deuxième combiné sont respectivement désignés par les mêmes références 1 à 6 que dans les figures 1 à 5. Pour simplifier le dessin, les câbles 3 et 5 sont représentés par un seul trait dans cette figure 6, bien qu'ils comportent évidemment au moins deux fils chacun.

La base 2 comporte un circuit de commande 21 relié d'une part au câble 3, et donc au réseau téléphonique, et d'autre part à l'émetteur et au récepteur déjà mentionnés qui sont respectivement désignés par les références 22 et 23. Cet émetteur 22 et ce récepteur 23 sont reliés à une antenne 24 par l'intermédiaire d'un circuit duplexeur 25.

Ces circuits ne seront pas décrits en détail car ils sont bien connus des spécialistes et n'ont pas de rapport direct avec la présente invention.

La base 2 comporte également des moyens pour fournir à ses divers circuits la tension d'alimentation continue stabilisée nécessaire à leur fonctionnement.

Ces moyens peuvent évidemment être simplement constitués par une pile non rechargeable. Cependant, si l'on ne veut pas avoir à la remplacer trop fréquemment, cette pile doit avoir une capacité importante, et donc de grandes dimensions, car les divers circuits de la base 2, et notamment l'émetteur 22, consomment une assez grande quantité d'énergie électrique.

Une telle pile de grandes dimensions étant difficile à loger dans le boîtier de la base 2, il est préférable d'utiliser une source d'alimentation connectée au réseau électrique pour fournir la tension d'alimentation des divers circuits de la base 2.

Une telle source, qui est bien connue, a été représentée à la figure 6 avec la référence 26, sa liaison avec le réseau électrique étant assurée par un câble 27, schématisé par un seul trait bien qu'il comprenne évidemment au moins deux fils. Cette source 26 comporte deux bornes de sortie 26a et 26b qui sont reliées aux bornes d'alimentation des divers circuits de la base 2 par des connexions, non représentées, symbolisées par des flèches.

La borne 26b de la source 26 est en outre reliée au point commun, ou masse, des divers circuits de la base 2.

La base 2 comporte encore un connecteur comprenant dans cet exemple trois fiches mâles 28, 29 et 30. Ces fiches 28 à 30 sont disposées dans la paroi du logement 11 de manière à entrer en contact électrique, lorsque le combiné 6 est disposé dans ce logement 11, avec trois prises femelles disposées sur le boîtier de ce combiné 6. Le rôle de ces fiches 28 à 30 et de ces prises sera rendu évident par la suite de cette description.

La base 2 comporte encore un commutateur 31 ayant une borne commune 31a qui est reliée sélectivement à une deuxième borne 31b ou à une troisième borne 31c par un contact mobile. Ce dernier est actionné, par exemple, par un poussoir mécanique non représenté situé dans la partie inférieure de la base 2, de manière à relier la borne commune 31a à la borne 31b, comme cela est représenté à la figure 6, lorsque la base 2 est posée sur une surface dure telle que la surface d'un meuble, et à relier cette borne commune 31a à la borne 31c lorsque cette base 2 n'est pas posée sur une telle surface.

La borne commune 31a de ce commutateur 31 est reliée à la fiche 29 et à la sortie d'une source de courant 32 dont le rôle sera rendu évident plus loin dans la présente description.

L'entrée de cette source de courant 32 est reliée à la borne 26a de la source d'alimentation 26. Pour une raison qui sera également rendue évidente plus loin dans cette description, la source de courant 32 comporte en outre une entrée de commande 32a reliée à la borne 31b du commutateur 31, et cette source de courant 32 est agencée de manière que le courant qu'elle fournit a une première intensité ou une deuxième intensité plus grande que la première selon que cette entrée de commande 32a est reliée, ou non, à sa sortie par le commutateur 31.

La borne 31c de ce commutateur 31 est reliée à la fiche 28.

La fiche 30 est reliée à la borne 26b de la source d'alimentation 26, et donc à la masse du circuit de la base 2.

Cette base 2 comporte encore un interrupteur 33, symbolisé par un simple contact, qui est branché en série entre le câble 3 et le câble 5. Cet interrupteur 33 est actionné, par exemple par un poussoir non représenté situé dans le support du premier combiné 4, de manière à relier ce dernier au câble 3, et donc au réseau téléphonique, lorsque ce combiné 4 est utilisé, c'est-à-dire lorsqu'il n'est pas posé sur son logement, et à interrompre cette liaison lorsque ce combiné 4 repose sur son logement.

Dans l'exemple représenté à la figure 6, le combiné 4 comporte simplement un écouteur 41 et un microphone 42 qui sont reliés au câble 5 par l'intermédiaire d'un circuit vocal 43 permettant de séparer les signaux provenant de la ligne téléphonique et destinés à exciter l'écouteur 41 des signaux produits par le microphone 42 qui doivent être envoyés sur cette ligne téléphonique.

Dans une autre forme d'exécution, non représentée, le circuit vocal 43 peut être disposé dans la base 2, le câble 5 comportant alors deux paires de fils reliant respectivement l'écouteur 41 et le microphone 42 à ce circuit vocal 43.

Le combiné 6, également schématisé à la figure 6, comporte une antenne 61 reliée, par l'intermédiaire d'un circuit duplexeur 62, à un émetteur 63 et à un récepteur 64, qui sont respectivement reliés à un microphone 65 et à un écouteur 66.

Ces divers éléments ne seront pas décrits ici, car ils sont bien connus des spécialistes. On notera simplement que le microphone 65 et l'écouteur 66 sont ceux qui ont été mentionnés plus haut et qui sont situés dans le boîtier du deuxième combiné 6 en regard des ouvertures 6a et 6b respectivement (voir la figure 2). On notera encore que l'émetteur 63 est accordé sur la même fréquence que le récepteur 23 situé dans la base 2, et que le récepteur 64 est accordé sur la même fréquence, différente de la précédente, que l'émetteur 22 également situé dans la base 2. Une liaison hertzienne peut donc être établie entre le microphone 65 et l'écouteur 66 du deuxième combiné 6 et la ligne téléphonique à laquelle est reliée la base 2, par l'intermédiaire de l'émetteur 63 et du récepteur 64, du duplexeur 62 et de l'antenne 61 d'une part et de l'antenne 24, du duplexeur 22, du récepteur 23 et de l'émetteur 22, et du circuit de contrôle 21 d'autre part.

L'émetteur 63 et le récepteur 64 sont reliés à un circuit de contrôle 67 qui ne sera pas décrit en détail ici car sa structure n'a pas de rapport direct avec la présente invention. On donnera plus loin quelques caractéristiques du fonctionnement de ce circuit de contrôle 67.

Trois prises femelles 68, 69 et 70 sont disposées sur le boîtier du combiné 6 de manière que, lorsque ce dernier est placé dans le logement 11 de la base 2, elles soient respectivement en contact électrique avec les fiches 28, 29 et 30 situées dans ce logement 11.

La prise 68 est reliée, par l'intermédiaire d'une diode 71, à une entrée 67a du circuit de commande 67 et à une première borne d'un interrupteur 72 qui est l'interrupteur, déjà mentionné, associée au curseur 9. Cette même prise 68 est également reliée, par l'intermédiaire d'une diode 73, à la deuxième borne de l'interrupteur 72 et à la première borne d'un autre interrupteur 74, qui est l'interrupteur, également déjà mentionné, associé au curseur 8.

La prise 69 est reliée, par l'intermédiaire d'une diode 75, à la deuxième borne de l'interrupteur 74 et à la borne positive d'un accumulateur rechargeable 76, au nickel-cadmium par exemple, dont la borne négative est reliée à la prise 70 et à la masse du combiné 6.

Les bornes d'alimentation des circuits mentionnés ci-dessus, à savoir le duplexeur 62, l'émetteur 63, le récepteur 64 et le circuit de commande 67, sont respectivement reliées, par des connexions non représentées mais symbolisées par des flèches, à la première borne de l'interrupteur 74 et à la borne négative de l'accumulateur 76. Cette première borne de l'interrupteur 74 et cette borne négative de l'accumulateur 76 sont en outre respectivement reliées aux bornes d'un circuit détecteur de tension 77.

Le fonctionnement des divers circuits de l'appareil 1 lorsque son usager l'utilise pour recevoir ou établir une communication téléphonique à l'aide de la base 2 et du premier combiné 4 ou à l'aide du deuxième combiné 6 ne sera pas décrit dans tous ses détails, car il est bien connu des spécialistes et ne concerne pas directement la présente invention.

On relèvera simplement que, lorsque le deuxième combiné 6 n'est pas dans son logement 11, les prises 68 à 70 ne sont évidemment pas reliées aux fiches 28 à 30 de la base 2.

Dans cette situation, qui est représentée à la figure 6, si l'interrupteur 74 est ouvert, c'est-à-dire si le curseur 8 est dans la position représentée à la figure 2, les divers circuits du combiné 6 ne reçoivent aucune tension de l'accumulateur 76. Ce combiné 6 est alors hors service et ne peut être utilisé ni pour recevoir ni pour établir une communication. L'accumulateur 76 n'a donc aucun courant à fournir et ne se décharge pas.

Toujours dans cette situation où le combiné 6 n'est pas dans son logement 11, si l'interrupteur 74 est fermé parce que l'utilisateur du deuxième combiné 6 a placé le curseur 8 dans sa deuxième position, les divers circuits du combiné 6 sont alimentés par l'accumulateur 76, à condition bien sûr que ce dernier soit suffisamment chargé.

Cependant, dans ce cas, si l'interrupteur 72 est ouvert parce que l'usager du combiné 6 a laissé, ou a mis, le curseur 9 dans sa première position, l'entrée 67a du circuit de contrôle 67 ne reçoit aucun signal. Ce circuit de contrôle 67 est agencé de manière à produire alors un signal de blocage de l'émetteur 63 qui empêche le fonctionnement de celui-ci et le met dans un état où sa consommation d'énergie électrique est faible.

Le circuit récepteur 64, par contre, fonctionne alors normalement, de sorte que le combiné 6 est dans un état d'attente où il peut recevoir, par l'intermédiaire de l'antenne 61 et du circuit duplexeur 62, un signal émis par l'antenne 24 de la base 2 indiquant qu'un correspondant cherche à atteindre l'utilisateur de ce combiné 6.

Lorsqu'un tel signal est reçu par le combiné 6, celui-ci émet un signal acoustique et l'utilisateur de ce combiné 6, s'il veut répondre à cet appel, doit placer le curseur 9 dans sa deuxième position, ce qui ferme le contact 72.

En réponse au signal de commande constitué par la tension de l'accumulateur 76 qu'il reçoit alors sur son entrée 67a, le circuit de contrôle 67 supprime le signal de blocage qu'il appliquait à l'émetteur 63. Ce dernier peut alors fonctionner, permettant ainsi à l'utilisateur du deuxième combiné 6 de parler à son correspondant. A la fin de la conversation, l'usager du combiné 6 remet le curseur 9 dans sa première position, ce qui ouvre à nouveau l'interrupteur 72. Le combiné 6 se trouve alors à nouveau dans l'état d'attente décrit ci-dessus où l'émetteur 63 est bloqué.

Si l'utilisateur du combiné 6 désire appeler un correspondant, il doit évidemment mettre le curseur 9 dans sa deuxième position, ce qui ferme le contact 72 et provoque le déblocage de l'émetteur 63 comme décrit ci-dessus. Cet émetteur 63 peut alors transmettre à l'antenne 61 les divers signaux qui sont destinés, après qu'ils ont été captés par l'antenne 24 et traités par les divers circuits de la base 2, à établir la communication avec le correspondant désiré.

On voit en outre que tant que l'interrupteur 74 est fermé, le circuit détecteur de tension 77 est relié à l'accumulateur 76. Ce circuit détecteur 77 est agencé de manière à produire un signal, par exemple optique, si la tension aux bornes de l'accumulateur 76 descend en dessous d'une tension prédéterminée. L'utilisateur du combiné 6 est ainsi averti que l'accumulateur 76 doit être rechargé pour que ce combiné 6 puisse continuer à fonctionner correctement.

Lorsque le deuxième combiné 6 est placé dans le logement 11 prévu dans la base 2 pour le recevoir, les fiches 28 à 30 situées dans ce logement 11 sont respectivement en contact avec les prises 68 à 70 de ce deuxième combiné 6.

Dans cette situation, la masse de la base 2 est reliée à la masse du deuxième combiné 6 par la fiche 30 et la prise 70, et l'accumulateur 76 est chargé ou rechargé par le courant qu'il reçoit de la source de courant 32 par l'intermédiaire de la fiche 29, de la prise 69 et de la diode 75.

Cette source de courant 32 est dimensionnée de manière que, lorsque son entrée de commande 32a est reliée à sa sortie, le courant qu'elle fournit à l'accumulateur 76 est au plus égal au courant que ce dernier doit recevoir, selon les prescriptions de son fabricant, pour être rechargé correctement.

Toujours dans la même situation, si la base 2 est posée sur une surface dure et que le commutateur 31 est donc dans la position représentée à la figure 6, et si l'interrupteur 74 est ouvert, ce qui est normalement le cas, le deuxième combiné 6 est hors service puisque ses divers circuits ne sont pas alimentés.

On a déjà mentionné que l'appareil téléphonique 1 peut être utilisé par deux personnes différentes pour communiquer avec un correspondant commun même lorsque le deuxième combiné 6 est disposé dans son logement 11 de la base 2. Cette utilisation de l'appareil 1 est rendue possible notamment par le fait que, dans cette situation, les ouvertures 6a et 6b, qui mettent respectivement le microphone et l'écouteur de ce combiné 6 en liaison acoustique avec l'extérieur de son boîtier, débouchent dans l'ouverture 11b ménagée dans la paroi inférieure 2d du boîtier de la base 2.

Lorsque l'appareil 1 est utilisé de cette façon, la base 2 n'est évidemment plus posée sur une surface dure, de sorte que le commutateur 31 occupe la position, non représentée, où sa borne 31a est reliée à sa borne 31c, comme cela a déjà été mentionné.

On voit que, dans cette situation, tous les circuits du deuxième combiné 6 sont alimentés par la tension présente à la sortie de la source de courant 32, par l'intermédiaire de la fiche 28, de la prise 68 et de la diode 73, indépendamment de la position de l'interrupteur 74. En outre, cette même tension est appliquée à l'entrée 67a du circuit de contrôle 67 par l'intermédiaire de la fiche 28, de la prise 68 et de la diode 71, ce qui a pour effet, comme ci-dessus, que ce circuit de contrôle 67 supprime le signal de blocage de l'émetteur 63.

Le deuxième combiné 6 est donc en service, bien qu'il soit disposé dans le logement 11 de la base 2, et son utilisateur, qui tient cette base 2, peut converser avec le correspondant de l'utilisateur du premier combiné 4 par l'intermédiaire de la liaison hertzienne qui existe entre les antennes 24 et 61 et des circuits associés à ces antennes.

On voit également que, pendant une telle utilisation du deuxième combiné 6, la source de courant 32 doit fournir non seulement le courant de charge de l'accumulateur 76, mais également le courant consommé par les divers circuits du combiné 6. Pour que l'accumulateur 76 reçoive toujours le courant qui est nécessaire à sa charge, cette source de courant 32 est dimensionnée de manière à augmenter l'intensité du courant qu'elle fournit lorsque son entrée de commande n'est pas reliée à sa sortie, ce qui est le cas lorsque la base 2 n'est pas posée sur une surface dure, cette augmentation étant sensiblement égale à l'intensité du courant consommé par les divers circuits du deuxième combiné 6.

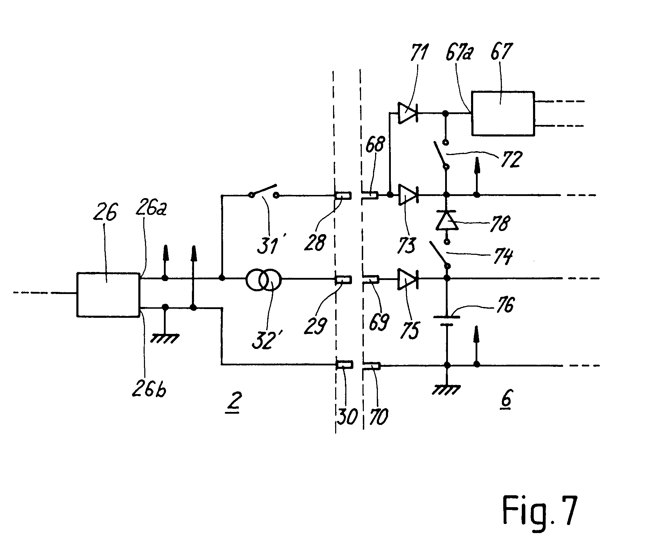

Dans la forme d'exécution de l'appareil téléphonique selon l'invention représentée schématiquement et partiellement à la figure 7, le contact commutateur 31 de la figure 6 est remplacé par un simple interrupteur 31' dont une borne est reliée à la sortie 26a de la source d'alimentation 26. Comme le commutateur 31, l'interrupteur 31' est actionné par un poussoir, non représenté, de manière qu'il soit ouvert lorsque la base 2 est posée sur une surface dure telle que la surface d'un meuble, et qu'il soit fermé lorsque cette base 2 n'est pas posée sur une telle surface.

De plus, la source de courant variable 32 de la figure 6 est remplacée par une source de courant fixe 32' qui est agencée de manière à fournir le courant nécessaire à la recharge de l'accumulateur 76.

En outre, une diode supplémentaire 78 est branchée entre l'interrupteur 74 et la borne positive de l'alimentation des circuits du deuxième combiné 6.

Tous les autres composants de l'appareil téléphonique 1 sont identiques à ceux qui sont représentés dans la figure 6 et sont reliés entre eux de la même manière que dans cette dernière figure.

On voit facilement que dans la forme d'exécution représentée par cette figure 7, les divers circuits du deuxième combiné 6 sont alimentés directement par la source d'alimentation 26 de la base 2, indépendamment de l'état de l'interrupteur 74, lorsque ce combiné 6 est disposé dans le logement 11, c'est-à-dire que les fiches 28 à 30 sont respectivement en contact électrique avec les prises 68 à 70, et que cette base 2 n'est pas posée sur une surface dure, c'est-à-dire que l'interrupteur 31' est fermé. La diode 78 évite que, dans une telle situation et si en outre l'interrupteur 74 est fermé, du courant fourni par la source d'alimentation 26 ne vienne s'ajouter au courant de charge de l'accumulateur 76 fourni par la source de courant 32', ce qui pourrait entraîner la destruction de cet accumulateur 76.

Il n'est pas possible d'énumérer et de décrire ici toutes les modifications qui peuvent être apportées à l'appareil téléphonique qui a été décrit ci-dessus sans sortir du cadre de la présente invention, car elles sont très nombreuses.

On mentionnera simplement que le circuit détecteur de tension 72 peut être combiné avec un interrupteur connecté en série entre la prise 69 et l'accumulateur 76, ce circuit détecteur de tension étant alors agencé de manière à ouvrir cet interrupteur et donc à interrompre la charge de cet accumulateur 76 lorsque la tension aux bornes de celui-ci atteint la valeur qui indique qu'il est complètement chargé.

On peut également interrompre la charge de l'accumulateur 76 à l'aide d'un détecteur de tension disposé dans la base 2 et agencé de manière à interrompre la liaison entre la fiche 29 et la source de courant 32 ou 32' lorsque la tension entre cette borne 29 et la masse des circuits de la base 2 atteint la valeur qui indique que l'accumulateur 76 est complètement chargé.

On mentionnera également que les fiches 28 à 30 et les prises 68 à 70 peuvent être remplacées par d'autres moyens assurant les mêmes connexions électriques entre la base 2 et le deuxième combiné 6. Ces moyens peuvent par exemple être constitués par trois plaquettes conductrices légèrement bombées, montées dans la paroi du logement 11 de manière à faire saillie dans celui-ci, et de trois autres plaquettes conductrices également légèrement bombées, montées dans la paroi extérieure du boîtier du deuxième combiné 6 de manière à venir en contact avec les trois plaquettes précédentes lorsque ce deuxième combiné 6 est disposé dans le logement 11. Ces plaquettes peuvent éventuellement être montées sur des ressorts pour garantir un bon contact électrique entre chacune d'elles et celle qui lui correspond indépendamment des tolérances de fabrication des boîtiers sur les parois desquels elles sont montées.

On peut encore mentionner que la diode 71 (figures 6 et 7) et ses liaisons avec la prise 68 et avec d'entrée 67a du circuit de contrôle 67 peuvent être supprimées. Dans ce cas, il faut fermer l'interrupteur 72 en mettant le curseur 9 dans sa deuxième position pour pouvoir utiliser le combiné 6 de la manière décrite ci-dessus, que ce deuxième combiné 6 soit disposé dans le logement 11 de la base 2 ou qu'il soit hors de ce logement 11.

On peut également mentionner que la source de courant 32 ou 32', le commutateur 31 ou l'interrupteur 31', les fiches 28 à 30, les prises 68 à 70 et les diodes 71, 73 et 75 peuvent être supprimés. Dans ce cas, l'accumulateur 76 doit être sorti du boîtier du deuxième combiné 6 lorsque le détecteur de tension 77 indique qu'il est déchargé, et placé dans un chargeur adéquat, séparé de l'appareil téléphonique 1, pour être rechargé. Dans ce même cas, l'alimentation des circuits du deuxième combiné 6 peut être assurée par une simple pile, non rechargeable, branchée à la place de l'accumulateur 76. Cette pile doit alors être remplacée par une pile neuve lorsque le détecteur de tension 77 indique qu'elle est déchargée.

Dans un cas semblable à celui qui est représenté par la figure 7, on peut également prévoir une pile non rechargeable pour alimenter les circuits du deuxième combiné 6, tout en conservant l'interrupteur 31', les fiches 28 à 30, les prises 68 à 70 et les diodes 71, 73 et 75, mais en supprimant bien entendu la source de courant 32' et en reliant directement la sortie 26a de la source 26 à la fiche 29. Dans ce cas, il faut de préférence brancher une diode supplémentaire en série avec la pile pour éviter que cette pile ne soit endommagée si sa tension est inférieure à celle que produit la source d'alimentation 26.

**Revendications**

1. Appareil téléphonique destiné à être connecté à une ligne téléphonique et comportant :
   - un premier combiné (4) comprenant un premier boitier, un premier écouteur (41) et un premier microphone (42) disposés dans ledit premier boîtier en liaison acoustique avec l'extérieur dudit premier boîtier;
   - un deuxième combiné (6) comprenant un deuxième boîtier, un deuxième écouteur (66) et un deuxième microphone (65) disposés dans ledit deuxième boîtier en liaison acoustique avec l'extérieur dudit deuxième boîtier, ledit deuxième combiné (6) comprenant en outre une première antenne (61) et des premiers circuits (62, 63, 64, 67) destinés à relier ledit deuxième écouteur (66) et ledit deuxième microphone (65) à ladite première antenne (61);
   - une base (2) comprenant un troisième boîtier comportant un premier logement destiné à recevoir ledit premier boîtier et un deuxième logement (11) destiné à recevoir ledit deuxième boîtier, ladite base (2) comprenant en outre une deuxième antenne (24) et des deuxièmes circuits (21, 22, 23, 25) destinés à relier ladite ligne téléphonique à ladite deuxième antenne (24); et
   - des moyens (33, 43) pour relier galvaniquement ledit premier écouteur (41) et ledit premier microphone (42) à ladite ligne téléphonique;
   - lesdites première (61) et deuxième antennes (24) et lesdits premiers (62, 63, 64, 67) et deuxièmes circuits (21, 22, 23, 25) étant adaptés les uns aux autres de manière à permettre une liaison dudit deuxième écouteur (66) et dudit deuxième microphone (65) avec ladite ligne téléphonique;

   caractérisé par le fait que ledit deuxième combiné (6) peut être au moins sensiblement complètement engagé dans ledit deuxième logement (11), et que ledit deuxième logement (11) comporte une ouverture (11b) ménagée dans une paroi dudit troisième boîtier de manière que, lorsque ledit deuxième combiné (6) est disposé dans ledit deuxième logement (11), ledit deuxième écouteur (66) et ledit deuxième microphone (65) sont également en liaison acoustique avec l'extérieur dudit troisième boîtier.

2. Appareil téléphonique selon la revendication 1, dans lequel ledit troisième boîtier comporte une paroi supérieure (2b) et une paroi inférieure (2d), caractérisé par le fait que ledit premier logement est ménagé dans ladite paroi supérieure (2b) et ladite ouverture (11b) est ménagée dans ladite paroi inférieure (2d).

3. Appareil téléphonique selon la revendication 1, caractérisé par le fait que :
   - ledit deuxième combiné (6) comporte une première source d'énergie électrique (76) qui est rechargeable et destinée à l'alimentation en énergie électrique desdit premiers circuits (62, 63, 64, 67), des premiers moyens actionnables manuellement (74) branchés en série entre une des bornes de ladite première source (76) et une première borne d'alimentation desdits premiers circuits (62, 63, 64, 67) et susceptibles de prendre un premier et un deuxième état pour enclencher et respectivement déclencher ladite alimentation desdits premiers circuits (62,63, 64, 67);
   - ladite base (2) comporte une deuxième source d'énergie électrique (26, 32; 26, 32') destinée à alimenter en énergie électrique lesdits deuxièmes circuits (21, 22, 23, 25) et à recharger ladite première source d'énergie électrique (76), et une première (29) et une deuxième borne (30) disposées sur la partie de la paroi dudit troisième boîtier qui délimite ledit deuxième logement (11) et reliées à ladite deuxième source d'énergie électrique (26, 32; 26, 32'); et
   - ledit deuxième combiné (6) comporte en outre une troisième (69) et une quatrième (70) borne reliées à ladite première source d'énergie électrique (76) et disposées sur la paroi dudit deuxième boîtier de manière à être respectivement en contact électrique avec ladite première (29) et ladite deuxième borne (30) lorsque ledit deuxième combiné est disposé dans ledit deuxième logement (11).

4. Appareil téléphonique selon la revendication 3, caractérisé par le fait que ladite deuxième source d'énergie électrique (26, 32; 26, 32') comporte une source de courant (32, 32') connectée en série avec l'une desdites première (29) et deuxième bornes (30).

5. Appareil téléphonique selon la revendication 3, caractérisé par le fait que :
   - ladite base (2) comporte une cinquième borne (28) également disposée sur la partie de la paroi dudit troisième boîtier qui délimite ledit deuxième logement (11) et des moyens (31, 31') pour interrompre ou établir une liaison électrique entre ladite cinquième borne (28) et ladite deuxième source d'énergie électrique (26, 32; 26, 32') selon que ladite base (2) est posée sur un support ou non;
   - ledit deuxième combiné (6) comporte une sixième borne (68) également disposée sur la paroi dudit deuxième boîtier de manière à être en contact électrique avec ladite cinquième borne (28) lorsque ledit deuxième combiné (6) est disposé dans ledit logement (11), ladite sixième borne (68) étant reliée à ladite première borne d'alimentation desdits premiers circuits (62, 63, 64, 67).

6. Appareil téléphonique selon la revendication 5, caractérisé par le fait que :
   - lesdits premiers circuits (62, 63, 64, 67) comportent un circuit émetteur (63) relié audit deuxième microphone (65) et à ladite première antenne (61) et susceptible de prendre un état de non-fonctionnement et un état de fonctionnement en réponse à la présence et, respectivement, à l'absence d'un signal de blocage, et un circuit de contrôle (67) comprenant une entrée de commande (67a) et destiné à produire et à supprimer ledit signal de blocage en réponse à l'absence et, respectivement, à la présence d'un signal de commande sur ladite entrée de commande (67a);
   - ledit deuxième combiné (6) comporte des deuxièmes moyens actionnables manuellement (72) susceptibles de prendre un premier état dans lequel ils établissent une liaison électrique entre ladite première borne d'alimentation desdits premiers circuits (62, 63, 64, 67) et ladite entrée de commande (67a) dudit circuit de contrôle (67), et un deuxième état dans lequel ils interrompent ladite liaison électrique; et

   - ladite sixième borne (68) est reliée à ladite entrée de commande (67a) dudit circuit de contrôle (67), ledit signal de commande étant constitué par la tension présente sur ladite première borne d'alimentation desdits premiers circuits (62, 63, 64, 67) lorsque lesdits deuxièmes moyens actionnables manuellement (72) sont dans ledit premier état et par la tension présente sur ladite sixième borne (68) lorsque ledit deuxième combiné (6) est disposé dans ledit deuxième logement (11).

Fig.1

Fig. 2

Fig. 3

Fig. 4

Fig. 5

Fig. 6

EP 0 504 864 A1

Fig.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 287 511 (ETA S.A. FABRIQUES D_EBAUCHES) * colonne 2, ligne 31 - colonne 11, ligne 53; figures 1-5 * | 1,3-6 | H04M1/02 H04M1/72 |
| A | WO-A-9 009 726 (SILVER) * page 4, ligne 27 - page 12, ligne 27; figures 2-7 * | 1,3-6 | |
| A | US-A-3 919 491 (LUCE) * colonne 7, ligne 11 - colonne 10, ligne 21; figures 8-11 * | 1,3 | |
| D,A | DE-A-3 434 686 (LICENTIA PATENT-VERWALTUNGS-GMBH ) * le document en entier * | 1 | |
| A | DE-A-1 933 716 (STANDARD ELEKTRIK LORENZ A.G.) * page 3, ligne 28 - page 5, ligne 16 * | 1 | |
| A | PATENT ABSTRACTS OF JAPAN vol. 13, no. 103 (E-725)(3451) & JP-A-63 275 248 ( NEC CORP. ) * abrégé * | 1 | **DOMAINES TECHNIQUES RECHERCHES (Int. Cl.5)** H04M H04B |

Le présent rapport a été établi pour toutes les revendications

| Lieu de la recherche | Date d'achèvement de la recherche | Examinateur |
|---|---|---|
| LA HAYE | 30 JUIN 1992 | DELANGUE P.C.J. |

EPO FORM 1503 03.82 (P0462)